# EUROPÄISCHE PATENTSCHRIFT

(11) **EP 1 940 635 B1**
(45) Veröffentlichungstag und Bekanntmachung des Hinweises auf die Patenterteilung: **11.02.2009**
(21) Anmeldenummer: 06806407.0
(22) Anmeldetag: 19.10.2006
(51) Int. Cl.: B60C 23/10, F04B 33/00, B60C 23/14, B62J 11/02

(54) **FAHRRAD MIT EINEM DRUCKBEAUFSCHLAGUNGSSYSTEM**
BICYCLE WITH A PRESSURIZATION SYSTEM
BICYCLETTE DOTEE D'UN SYSTEME DE POUSSEE

(30) Priorität: 26.10.2005 DE 102005051284
(43) Veröffentlichungstag der Anmeldung: 09.07.2008
(73) Patentinhaber: Krüdenscheidt, Lars, 42477 Radevormwald (DE)
(72) Erfinder: Krüdenscheidt, Lars, 42477 Radevormwald (DE)
(74) Vertreter: Grünberg, Thomas
(86) Internationale Anmeldenummer: PCT/EP2006/010104
(87) Internationale Veröffentlichungsnummer: WO 2007/048539

(56) Entgegenhaltungen:
- WO-A-00/06901
- AU-A- 3 304 071
- BE-A- 480 975
- CH-A- 80 308
- CH-A- 229 766
- DE-A1- 19 538 438
- DE-C- 893 307
- FR-A- 515 965
- FR-A1- 2 817 198
- GB-A- 724 960
- GB-A- 2 385 030
- US-A- 631 773
- US-A- 5 890 725

## Beschreibung

Die Erfindung betrifft für ein Fahrrad mit einem Druckbeaufschlagungssystem für mindestens eine mit einem Luftdruck beaufschlagte Komponente nach dem Oberbegriff des Patentanspruches 1.

Ein derartiges Fahrrad ist aus der DE 893 307 bekannt und umfasst ein Druckbeaufschlagungssystem, das eine Druckquelle umfasst, die mit einer Fahrradkomponente verbunden ist, die mit einem gasförmigen Druckmedium beaufschlagt ist. Die Druckquelle umfasst einen Kompressor, der mit einem Antriebsrad versehen ist, das mittels einer herkömmlichen Fahrradkette, d. h. mittels der Antriebskurbeleinheit des Fahrrads antreibbar ist. Des Weiteren weist die Druckquelle einen Speicherabschnitt auf, der mittels des Kompressors mit einem Gasdruck beaufschlagbar ist. Dieses Druckbeaufschlagungssystem ist an der Hinterseite eines Sattelrohrs des Fahrrads als sperriges Zubehörteil befestigt.

Ein Druckbeaufschlagungssystem für ein Fahrrad ist auch aus der DE 195 38 438 A1 bekannt und dient in diesem Falle zum Heben und Senken eines Sattels eines Fahrrads. Dieses System umfasst als Druckquelle einen patronenartig ausgebildeten Druckbehälter, der mit einer Zylinder/Kolber/Anordnung zusammenwirkt, die in einen Rahmen des Fahrrads integriert ist. Die Zylinder/Kolben-Anordnung wirkt auf eine Sattelstütze für den Sattel.

Insbesondere sportlich ambitionierte Fahrradfahrer, die auf verschiedenen Untergründen fahren, haben bisweilen das Bedürfnis, den Luftdruck, mit dem die Reifen ihres Fahrrads beaufschlagt sind, dem jeweiligen Untergrund anzupassen. Hierzu muss der Fahrradfahrer bisher anhalten, um den Reifendruck verringern bzw. mit einer Handpumpe erhöhen zu können. Die gleiche Problematik besteht bei pneumatischen Dämpfungselementen, die mit einem dem jeweiligen Untergrund bzw. Terrain angepassten Luftdruck beaufschlagt werden sollen.

Der Erfindung liegt die Aufgabe zugrunde, ein gemäß der einleitend genannten Gattung ausgebildetes Fahrrad bereitzustellern, mittels dessen während der Fahrt eine Einstellung eines Gasdrucks einer mit einem gasförmigen Druckmedium beaufschlagten Komponente des Fahrrads möglich ist.

Diese Aufgabe ist erfindungsgemäß durch das Fahrrad mit dem Druckbeaufschlagungssystem mit den Merkmalen des Patentanspruches 1 gelöst.

Der Kern der Erfindung besteht mithin darin, eine Druckquelle bereitzustellen, die durch Betätigung einer ohnehin bei einem Fahrrad vorhandenen Antriebskurbeleinheit aktivierbar ist, so dass der in der mit dem gasförmigen Druckmedium beaufschlagten Komponente herrschende Luftdruck gemäß einer Vorgabe des Fahrers des betreffenden Fahrrads durch Treten angepasst werden kann.

Die Komponente, die mit dem gasförmigen Druckmedium beaufschlagt ist, ist beispielsweise ein Reifen bzw. dessen Schlauch oder ein pneumatisches Fahrwerkdämpferelement des Fahrrads. Denkbar ist es aber auch, die Druckquelle für ein Satteldämpferelement, ein pneumatisch betätigtes Schaltwerk, einen pneumatisch betätigten Umwerfer, eine Druckluftbremse oder dergleichen einzusetzen.

Die Luftquelle ist patronenartig ausgebildet und in ein Sattelrohr des Fahrrads eingepasst, so dass eine Antriebswelle des Kompressors eine Wandung des Sattelrohrs durchgreift. Bei der Montage eines derartigen Druckbeaufschlagungssystems ist es erforderlich, eine Bohrung in das Sattelrohr des Fahrrads einzubringen, in welche die Antriebswelle des Kompressors eingesetzt wird. Die Antriebswelle kann so die patronenartig ausgebildete Luftquelle an ihrem Einbauort in dem Sattelrohr sichern. Das Sattelrohr ist in der Regel von oben zugänglich.

Des Weiteren ist der Kompressor mit einem Luftansaugstutzen versehen, der das Sattelrohr durchgreift, in das die Druckquelle eingepasst ist. Dieser Ansaugstutzen dient einerseits zum Ansaugen von Umgebungsluft und andererseits zur weiteren Sicherung der Druckquelle in dem Sattelrohr.

Um stets einen ausreichenden Druck zur Befüllung der betreffenden Fahrradkomponente zur Verfügung zu haben, hat die Druckquelle einen Speicherabschnitt, der mittels des Kompressors mit einem Gasdruck beaufschlagbar ist. Der Kompressor pumpt in diesem Fall also das Gas, in der Regel Luft, in den Speicherabschnitt, der dann bei Bedarf den entsprechenden Gasdruck für die betreffende Komponente zur Verfügung stellt.

Um den in dem Speicherabschnitt herrschenden-Gasdruck auf einem konstanten Niveau halten zu können, ist vorzugsweise zwischen dem Kompressor und dem Speicherabschnitt ein Stellventil angeordnet, das bei Erreichen eines Solldrucks in dem Speicherabschnitt schaltet. Insbesondere schaltet dieses Stellventil derart, dass der Kompressor in seiner Förderphase die angesaugte Luft wieder an die Umgebung abführt, was keine Erhöhung des Tretwiderstands mit sich bringt. Wenn der Gasdruck in dem Speicherabschnitt den Solldruck unterschreitet, was in der Regel nach einer Befüllung der mit dem Druckmedium beaufschlagten Komponente der Fall ist, stellt das Stellventil eine Verbindung zwischen den Kompressor und dem Speicherabschnitt her, so dass der Speicherabschnitt wieder mit dem Solldruck beaufschlagt werden kann.

Alternativ oder auch zusätzlich kann zwischen der Antriebskurbeleinheit und dem Kompressor eine Kupplung angeordnet sein, die bei Erreichen eines Solldrucks in dem Speicherabschnitt öffnet. Bei einer derartigen Kupplung handelt es sich insbesondere um eine pneumatisch betätigte Kupplung, bei deren Öffnen der Kompressor deaktiviert wird. Das Antriebsrad des Kompressors dreht sich nach dem Öffnen der Kupplung frei mit der Antriebskurbel mit.

Um zu verhindern, dass Partikel angesaugt werden, die die Funktion des Kompressors beeinträchtigen könnten, ist der Luftansaugstutzen vorzugsweise mit einem Filter versehen. Damit kann auch verhindert werden, dass sich Kondenswasser im System

Zum Abrufen des in der Druckquelle vorgehaltenen Gasdrucks durch den Fahrer des Fahrrads ist es zweckmäßig, in einer Leitung, die die Druckquelle und die mit dem Druckmedium beaufschlagte Komponente des Fahrrads verbindet, eine Handbetätigungseinrichtung angeordnet ist.

Die Handbetätigungseinrichtung umfasst vorzugsweise eine Bedienwippe oder dergleichen, mittels der der Gasdruck in der betreffenden Komponente erhöht oder verringert werden kann.

Die.Handbetätigungseinrichtung, die vorzugsweise an einer Lenkstange des Fahrrads fixierbar ist und hierzu eine entsprechende Schelle oder dergleichen aufweisen kann, umfasst vorzugsweise mindestens eine Druckanzeige, die Informationen hinsichtlich des in der betreffenden Komponente herrschenden Gasdrucks liefert.

Um zu verhindern, dass die betreffende, mit dem Druckmedium beaufschlagte Komponente durch einen Überdruck beschädigt wird, ist es vorteilhaft, das Druckbeaufschlagungssystem nach der Erfindung mit mindestens einem Überdruckventil auszustatten.

Das Druckbeaufschlagungssystem des Fahrrads nach der Erfindung kann zur Gasdruckeinstellung mehrerer mit einem mit einem gasförmigen Druckmedium beaufschlagter Komponenten des Fahrrads dienen. In diesem Fall ist es zweckmäßig, eine Verteilereinrichtung vorzusehen, die einerseits eingangsseitig mit der den Kompressor aufweisenden Druckquelle und andererseits ausgangsseitig über mehrere Auslassstutzen oder -kanäle mit den betreffenden Fahrradkomponenten verbunden ist.

Wenn die mit dem Druckmedium beaufschlagte Komponente, die mit der Druckquelle des Druckbeaufschlagungssystems verbunden ist, ein Reifen eines Laufrads des Fahrrads ist, ist es zweckmäßig, wenn das Laufrad eine gedichtete Nabe umfasst, in deren Achse eine rahmenfeste oder gabelfeste Luftleitung mündet und die radial mit einer bezüglich der Nabenachse rotierende Luftleitung verbunden ist, die zu dem Reifen bzw. zu dessen Schlauch führt.

Der Antrieb des Kompressors erfolgt vorzugsweise mittels eines Zahnriemens, der das Antriebsrad des Kompressors und die Antriebskurbel des Fahrrads verbindet. In diesem Falle ist es erforderlich, an der Antriebskurbeleinheit, insbesondere an der den Kettenblättern abgewandten Seite der Antriebskurbeleinheit ein Zahnrad vorzusehen, in das der Zahnriemen eingreift. Anstelle eines Zahnriemens kann natürlich auch eine Kette oder ein Keilriemen vorgesehen sein. In letzterem Fall werden aber statt Zahnrädern Riemenscheiben eingesetzt, zwischen welchen der Keilriemen eingespannt ist.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele des Gegenstandes nach der Erfindung sind in der Zeichnung schematisch vereinfacht dargestellt und werden in der nachfolgenden Beschreibung näher erläutert. Es zeigt:
- Fig. 1: eine Ansicht eines Fahrrads mit einem Druckbeaufschlagungssystem nach der Erfindung;
- Fig. 2: eine Druckquelle des Druckbeaufschlagungssystems;
- Fig. 3: eine alternative Ausführungsform eines Druckbeaufschlagungssystems;
- Fig. 4: eine Draufsicht auf eine Handbetätigungseinrichtung des Druckbeaufschlagungssystems;
- Fig. 5: einen Schnitt durch die Handbetätigungseinrichtung nach Fig. 4; und
- Fig. 6: einen Schnitt durch eine Nabe eines Laufrads des Fahrrads nach Fig. 1.

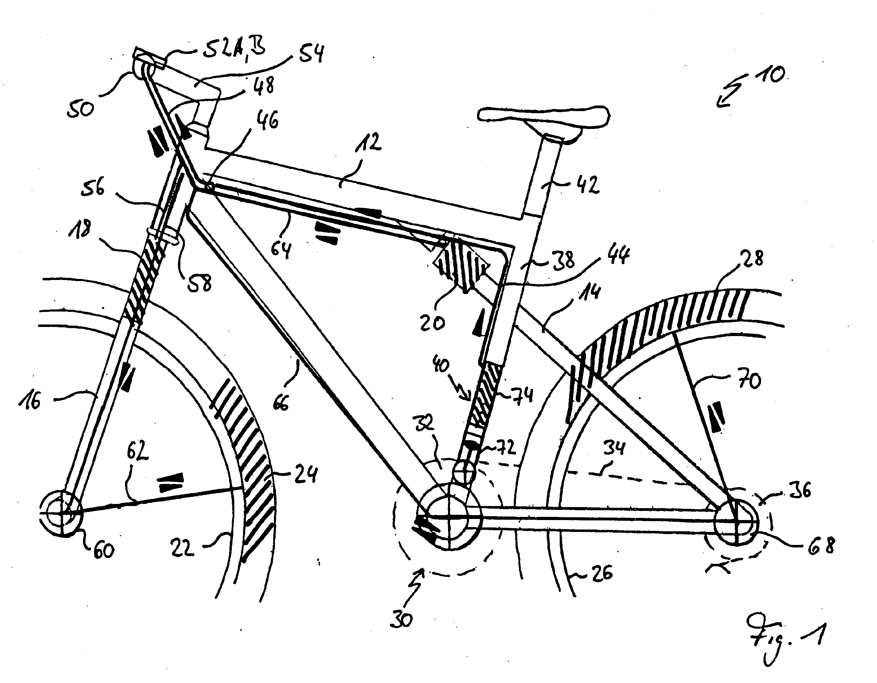

In Fig. 1 ist ein Fahrrad 10 dargestellt, das als so genanntes Mountainbike ausgebildet ist und einen Rahmen 12 aufweist, der mit einem schwenkbar gelagerten Hinterbau 14 sowie mit einer Federgabel 16 versehen ist. Die Federgabel 16 umfasst ein Luftdämpfungselement 18. Der Hinterbau 14 ist mit einem ebenfalls luftgefederten Dämpfungselement 20 versehen. Des Weiteren weißt das Fahrrad 10 ein vorderes Laufrad 22 mit einem Vorderreifen 24 und ein hinteres Laufrad 26 mit einem Hinterreifen 28 auf. Das Dämpferelement 18 der Federgabel 16, das Hinterbaudämpferelement 20, der Vorderreifen 24 und der Hinterreifen 28 stellen jeweils eine mit einem gasförmigen Druckmedium beaufschlagte Komponente des Fahrrads 10 dar.

Des Weiteren ist das Fahrrad 10 in üblicher Weise mit einer Antriebskurbeleinheit 30 versehen, die über Kettenblätter 32 und eine Kette 34 auf eine Ritzel aufweisende Kassette 36 wirkt, die an dem hinteren Laufrad 26 abgebracht ist.

In einem Sattelrohr 38 des Rahmens 12 ist eine Druckquelle 40 für ein gasförmiges Druckmedium, im vorliegenden Fall Luft, integriert, welche patronenartig ausgebildet und von oben bei herausgezogener Sattelstütze 42 in das Sattelrohr 38 eingeführt werden kann.

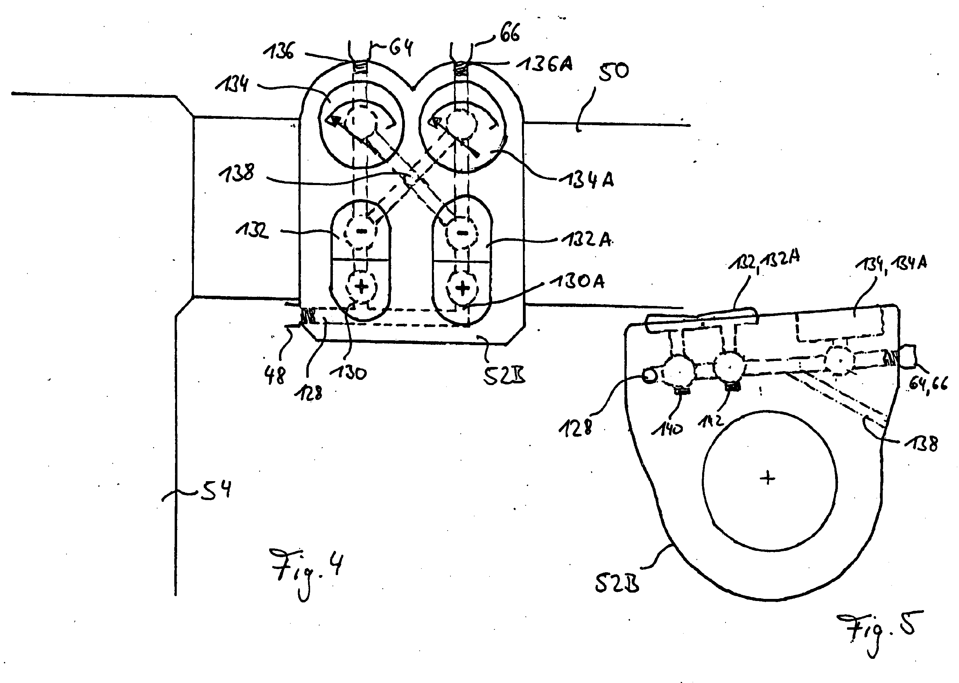

Die Druckquelle 40 ist über eine Druckleitung 44 mit einem Verteiler 46 verbunden, der mit zwei Auslasskanälen versehen ist, welche jeweils über eine Leitung 48 zu einer an einer Lenkstange 50 befestigten Handbetätigungseinrichtung 52A bzw. 52B führen, welche anhand der Figuren 4 und 5 näher dargestellt ist. Die Handbetätigungseinrichtung 52A ist auf der linken Seite eines Vorbaus 54 an der Lenkstange 50 fixiert. Die Handbetätigungseinrichtung 52B ist auf der linken Seite des Vorbaus 54 an der Lenkstange 50 fixiert.

Von der linken Handbetätigungseinrichtung 52A zweigen zwei Leitungen 56 und 58 ab, wobei die Leitung 56 zu dem Dämpferelement 18 und die Leitung 58 über eine Radnabe 60 zu einer mit dem Reifen 24 verbundenen Leitung 62 führt.

Von der rechten Handbetätigungseinrichtung 52B zweigen eine Leitung 64 ab, die zu dem Hinterbaudämpferelement 20 führt, und eine Leitung 66 ab, die zu einer Hinterradnabe 68 führt, von welcher wiederum eine Leitung 70 abzweigt, die zu dem Reifen 28 des hinteren Laufrads 26 führt.

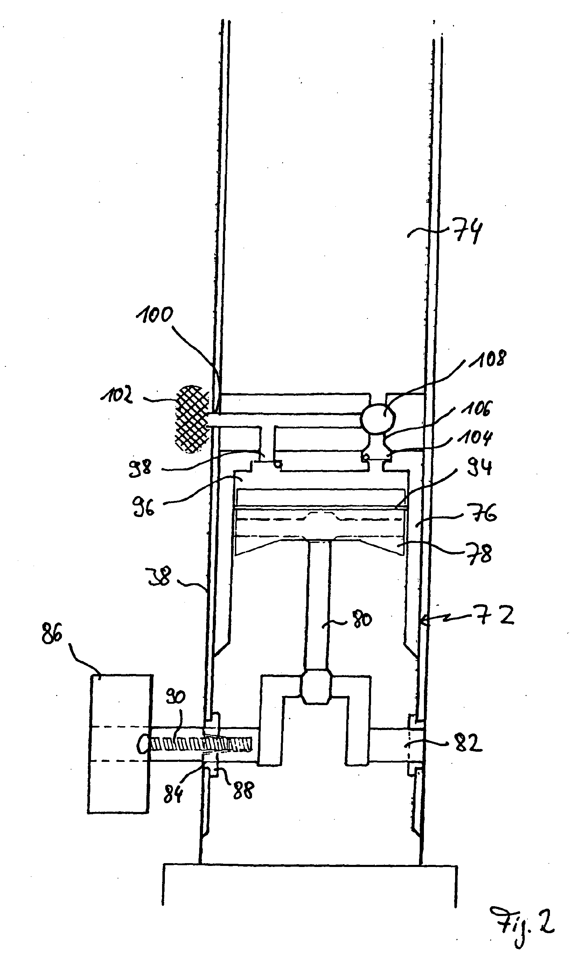

Die Druckquelle 40, die insbesondere in Fig. 2 dargestellt ist, umfasst einen Kompressor 72 und einen Speicherabschnitt 74, in dem Luft, die mittels des Kompressors 72 verdichtet wurde, mit einem gewünschten Druck vorgehalten werden kann.

Der Kompressor 72 umfasst einen in einem Zylinder 76 geführten Kolben 78, der über eine Kolbenstange 80 mit einer Kurbelwelle bzw. Antriebswelle 82, die eine Bohrung 84 des Sattelrohrs 38 durchgreift, mit einem als Ritzel ausgebildeten Antriebsrad 86 für den Kompressor 72 verbunden ist. Im Bereich der Bohrung 84 des Sattelrohrs 38 ist die Kurbelwelle 82 an einem Lager 88 drehbar gelagert.

Das Antriebsrad 86 ist mittels einer Schraube 90 an der Antriebswelle 82 befestigt und über einen Zahnriemen 92 mit einem hier nicht näher dargestellten Zahnrad verbunden, das an der dem Kettenblatt 32 abgewandten Seite des Kurbellagers der Kurbeleinheit 30 angeordnet ist.

Der Kolben 78, der an seiner Umfangsfläche eine Gleitdichtung 94 aufweist grenzt an seiner der Kolbenstange 80 abgewandten Stirnseite an einen Verdichtungsraum 96, der über ein Einlassventil 98 mit einem das Sattelrohr 38 durchgreifenden Ansaugstutzen 100 verbunden ist, auf dem ein Luftfilter 102 sitzt. Von dem Verdichtungsraum 96 zweigt des Weiteren über ein Auslassventil 104 eine Auslassleitung 106 ab, die zu dem Speicherabschnitt 74 führt.

In der Auslassleitung bzw. Druckleitung 106 ist ein Stellventil 108 angeordnet, das in Abhängigkeit von dem in dem Speicherabschnitt 74 herrschenden Druck schaltet, und zwar derart, dass bei Überschreiten eins Solldrucks in dem Speicherabschnitt 74 von dem Kompressor 72 verdichtete Luft nicht in den Speicherabschnitt 74 sondern über eine Leitung 110 zu dem Ansaugstutzen 100 und von dort an die Umgebung gefördert wird.

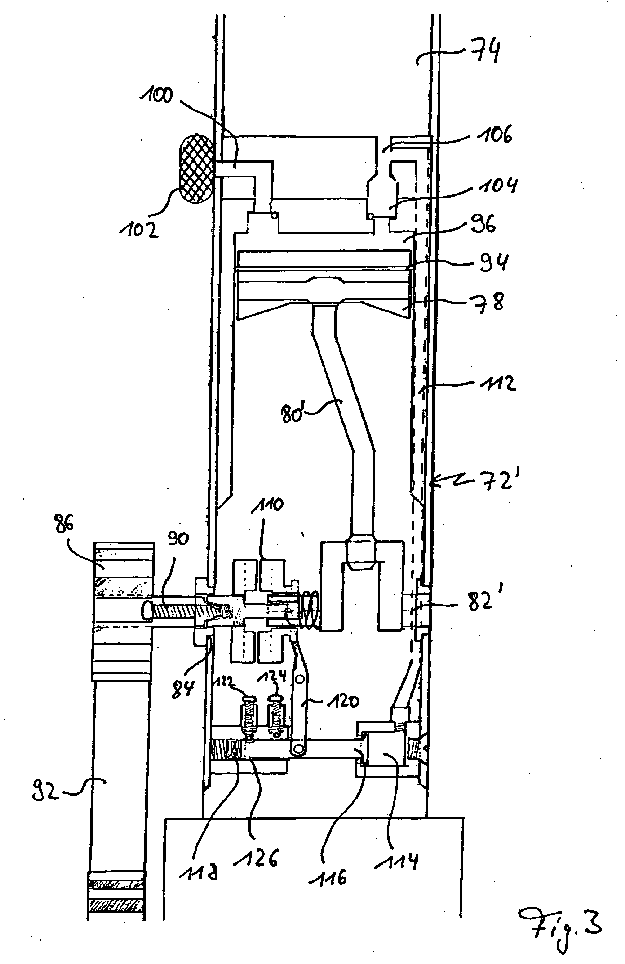

In Fig. 3 ist eine alternative Ausführungsform einer Druckquelle zum Einbau in ein Sattelrohr 38 eines Fahrrads dargestellt. Die Druckquelle nach Fig. 3 umfasst entsprechend der Ausführungsform nach Fig. 2 einen Kompressor 72', der einen in einem Zylinder 76 geführten Kolben 78 umfasst. Der Kolben 78 ist hier über eine gekröpfte Kolbenstange 80' mit einer Kurbelwelle 82' verbunden, die als Antriebswelle für den Kolben 78 dient und das Sattelrohr 38 durchgreift. Außerhalb des Sattelrohrs 38 ist auf die Antriebswelle 82' ein Antriebsrad 86 aufgesetzt und mittels einer Schraube 90 fixiert. Im Bereich einer Bohrung 84 des Sattelrohrs 38 ist des Weiteren ein Lager 88 für die Antriebswelle 82' ausgebildet.

Die Antriebswelle 82' ist mit einer pneumatisch betätigbaren Kupplung 110 versehen, welche in Abhängigkeit von dem in einem Speicherabschnitt 74 herrschenden Luftdruck öffnet bzw. schließt und so die Hubbewegung des Kolbens 78 steuert. Hierzu zweigt von einer von dem Verdichtungsraum 96 des Kompressors 72' abzweigenden Druckleitung 106 eine Steuerleitung 112 ab, die zu einem Druckraum 114 führt, in dem ein Kolben 116 axial verschiebbar geführt.ist, der mittels einer Feder 118 vorgespannt ist. An dem Kolben 116 ist ein Hebel 120 schwenkbar gelagert, der in Abhängigkeit von der Stellung des Kolbens 116, d.h. von dem in dem Druckraum 114 herrschenden Druck die Kupplung 110 öffnet bzw. schließt. Um die beiden Schaltstellungen des Kolbens 116 zu sichern, sind des Weiteren Rastglieder 122 und 124 vorgesehen, die jeweils federbelastet sind und mit einer Ringnut 126 des Kolbens 116 zusammenwirkt.

In den Figuren 4 und 5 ist die rechte Handbetätigungseinrichtung 52B dargestellt, die dem Hinterbaudämpferelement 20 und dem Hinterreifen 28 zugeordnet ist. Die Handbetätigungseinrichtung 52B hat einen Einlasskanal 128, in den die von dem Verteiler 46 abzweigende Leitung 48 mündet. Von dem Einlasskanal 128 zweigt ein erster Steuerkanal 130 ab, der mit einer ersten Schaltwippe 132 und dieser nachgeordnet mit einem ersten Manometer 134 versehen ist und der zu einem ersten Auslasskanal 136 führt, der mit der zu dem Hinterbaudämpferelement 20 führenden Leitung 64 verbunden ist. Des Weiteren zweigt von dem Einlasskanal 128 ein zweiter Steuerkanal 130A ab, der mit einer zweiten Steuerwippe 132A und dieser nachgeschaltet mit einem zweiten Manometer 134A versehen ist und der zu einem zweiten Auslasskanal 136A führt, der mit der zu dem hinteren Laufrad 26 führenden Leitung 66 verbunden ist.

Die Steuerwippen 132 und 132A sind jeweils so ausgebildet, dass sie ein mit einem "+" gekennzeichnetes Tastfeld und ein mit einem "-" gekennzeichnetes Tastfeld umfassen, wobei durch den jeweiligen Druck der in der jeweils zugeordneten Komponente 20 bzw. 28 herrschende Luftdruck erhöht oder gesenkt werden kann. Bei einem Druck auf das mit "-" gekennzeichnete Tastfeld der Bedienwippen 132 und 123A wird Luft über eine Überdruckleitung 138 der Handbetätigungseinrichtung 52B abgeführt.

Die Bedienwippen 132, 132A werden mittels Federelementen 140 und 142 in ihrer neutralen Position gehalten, in welcher keine Regulierung des Luftdrucks in den jeweiligen druckbeaufschlagten Komponenten 20 und 28 erfolgt.

Die Handbetätigungseinrichtung 52A für den Luftdruck in dem Dämpferelement 18 der Federgabel 16 und den Luftdruck in dem Vorderreifen 24 ist entsprechend ausgebildet.

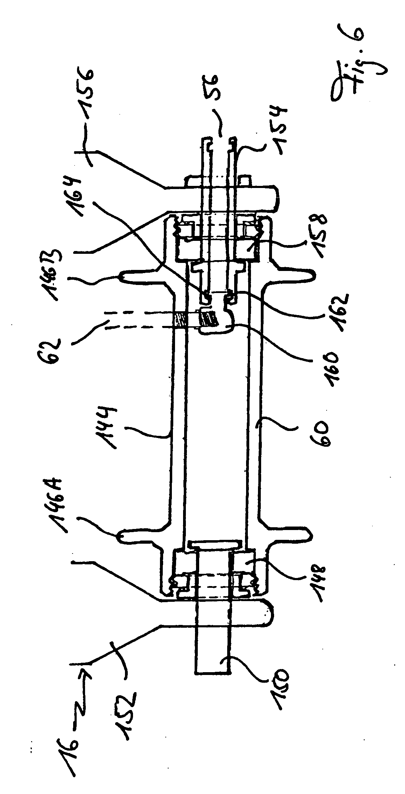

In Fig. 6 ist die Nabe 60 des vorderen Laufrads 22 dargestellt, welche zur Umlenkung von Luft von der Leitung 58 zu der mit dem Druckraum des Reifens 24 in Verbindung stehenden Leitung 62 oder umgekehrt dient. Die Nabe 60 hat hierzu eine rohrförmige Nabenschale 144, die zwei Ringbünde 146A und 146B zur Fixierung von Speichen aufweist. Die Nabenschale 144 ist an der in Fig. 6 links dargestellten Seite über ein Lager 148 drehbar mit einer als Achse dienenden Buchse 150 verbunden, über die die Nabe 60 an einem Schenkel 152 der Gabel 16 eingespannt werden kann. An der der Buchse 150 abgewandten Seite weist die Nabe 60 eine röhrchenartige, als Achse dienenden Hülse 154 auf, in die die rahmenfeste bzw. gabelfeste Leitung 56 mündet und die drehfest an einem zweiten Schenkel 156 der Gabel fixiert ist. An der Hülse 154 ist ein Lager 158 fixiert, über das die Nabenhülse 144 drehbar mit der Hülse 154 verbunden ist.

An der der Leitung 56 abgewandten Seite ist in die Hülse 154 ein Winkelstück 160 eingepasst, das in einer Ringnut 162 mittels eines Ringbunds 164 drehbar und gedichtet gelagert ist und in das die Leitung 62 eingreift, die die Lagerschale 144 durchgreift und zu dem Vorderreifen 28 führt.

Des Weiteren kann noch eine hier nicht näher dargestellte Ablassschraube für Kondenswasser vorgesehen sein.

## Patentansprüche

1. Fahrrad, umfassend einen Rahmen (12) mit einem Sattelrohr, mindestens eine mit einem gasförmigen Druckmedium beaufschlagte Komponente (18, 20, 24, 28) sowie ein Druckbeaufschlagungssystem, das eine mit der Komponente (18, 20, 24, 28) verbundene Druckquelle (40) umfasst, wobei die Druckquelle (40) einen Kompressor (72), der mit einem Antriebsrad (86) versehen ist, das mittels einer Antriebskurbeleinheit (30) des Fahrrads antreibbar ist, sowie einen Speicherabschnitt (74) aufweist, der mittels des Kompressors (72) mit einem Gasdruck beaufschlagbar ist, **dadurch gekennzeichnet, dass** die Druckquelle (40) derart patronenartig ausgebildet ist, dass sie in das Sattelrohr (38) des Rahmens (12) eingepasst ist, und dass eine Antriebswelle (82) des Kompressors (72) das Sattelrohr durchgreift und der Kompressor (72) mit einem Luftansaugstutzen (100) versehen ist, der das Sattelrohr (38) durchgreift.

2. Fahrrad nach Anspruch 1, **dadurch gekennzeichnet, dass** zwischen dem Kompressor (72) und dem Speicherabschnitt (74) ein Stellventil (108) angeordnet ist, das bei Erreichen eines Solldrucks in dem Speicherabschnitt (74) schaltet.

3. Fahrrad nach Anspruch 1, **gekennzeichnet durch** eine zwischen der Antriebskurbeleinheit (30) und dem Kompressor (72) angeordnete Kupplung (110), die bei Erreichen eines Solldrucks in dem Speicherabschnitt (74) öffnet.

4. Fahrrad nach Anspruch 1, **dadurch gekennzeichnet, dass** der Luftansaugstutzen (100) mit einem Filter (102) versehen ist.

5. Fahrrad nach einem der Ansprüche 1 bis 4, **dadurch gekennzeichnet, dass** in einer Leitungen (44, 48, 56, 58, 64, 66), die die Druckquelle (40) und die mit dem Druckmedium beaufschlagte Komponente (18, 20, 24, 28) des Fahrrads verbinden, mindestens eine Handbetätigungseinrichtung (52A, 52B) angeordnet ist.

6. Fahrrad nach Anspruch 5, **dadurch gekennzeichnet, dass** die Handbetätigungseinrichtung (52A, 52B) mindestens eine Bedienwippe (132, 132A) umfasst.

7. Fahrrad nach Anspruch 5 oder 6, **dadurch gekennzeichnet, dass** die Handbetätigungseinrichtung (52A, 52B) mindestens eine Druckanzeige (134, 134A) umfasst.

8. Fahrrad nach einem der Ansprüche 5 bis 7, **dadurch gekennzeichnet, dass** die Handbetätigungseinrichtung (52A, 52B) an einer Lenkstange (50) fixiert ist.

9. Fahrrad nach einem der Ansprüche 1 bis 8, **gekennzeichnet durch** mindestens ein Überdruckventil.

10. Fahrrad nach einem der Ansprüche 1 bis 9, **gekennzeichnet durch** eine Verteilereinrichtung (46) für mehrere mit dem Druckmedium beaufschlagte Komponenten (18, 20, 24, 28).

11. Fahrrad nach einem der Ansprüche 1 bis 10, **dadurch gekennzeichnet, dass** die mit einem Druckmedium beaufschlagte Komponente (24, 28) ein Reifen eines Laufrads (22, 26) des Fahrrads ist.

12. Fahrrad nach Anspruch 11, **dadurch gekennzeichnet, dass** das Laufrad (22, 26) eine gedichtete Nabe (60, 68) umfasst, in deren Achse eine rahmenfeste oder gabelfeste Luftleitung (58, 66) mündet und die radial mit einer bezüglich der Nabenachse rotierenden Luftleitung (62, 70) verbunden ist, die zu einem Druckraum des Reifens (24, 28) führt.

13. Fahrrad nach einem der Ansprüche 1 bis 12, **dadurch gekennzeichnet, dass** die mit dem Druckmedium beaufschlagte Komponente (28, 20) ein Fahrwerkdämpferelement des Fahrrads ist.

14. Fahrrad nach einem der Ansprüche 1 bis 13, **dadurch gekennzeichnet, dass** der Kompressor (72) mittels eines Zahnriemens (92) antreibbar ist, der das Antriebsrad (86) des Kompressors (72) und die Antriebskurbeleinheit (30) verbindet.

## Claims

1. Bicycle, comprising a frame (12) with a saddle tube, at least one component (18, 20, 24, 28) pressurized with a gaseous pressure medium and a pressurization system, which comprises a pressure source (40) connected to the component (18, 20, 24, 28), the pressure source (40) having a compressor (72), which is provided with a drive wheel (86) that can be driven by means of a drive crank unit (30) of the bicycle, and a storage section (74), which can be pressurized with a gas pressure by means of the compressor (72), **characterized in that** the pressure source (40) is constructed in the manner of a cartridge in such a way that it is fitted into the saddle tube (38) of the frame (12), and **in that** a drive shaft (82) of the compressor (72) reaches though the saddle tube and the compressor (72) is provided with an air intake nozzle (100) which reaches through the saddle tube (38).

2. Bicycle according to Claim 1, **characterized in that** between the compressor (72) and the storage section (74) there is arranged an actuating valve (108), which switches when an intended pressure is reached in the storage section (74).

3. Bicycle according to Claim 1, **characterized by** a clutch (110) which is arranged between the drive crank unit (30) and the compressor (72) and which disengages when an intended pressure is reached in the storage section (74).

4. Bicycle according to Claim 1, **characterized in that** the air intake nozzle (100) is provided with a filter (102).

5. Bicycle according to one of Claims 1 to 4, **characterized in that** at least one manual actuating device (52A, 52B) is arranged in one of lines (44, 48, 56, 58, 64, 66) which connect the pressure source (40) and the component (18, 20, 24, 28) of the bicycle that is pressurized with the pressure medium.

6. Bicycle according to Claim 5, **characterized in that** the manual actuating device (52A, 52B) comprises at least one operating rocker (132, 132A).

7. Bicycle according to Claim 5 or 6, **characterized in that** the manual actuating device (52A, 52B) comprises at least one pressure indicator (134, 134A).

8. Bicycle according to one of Claims 5 to 7, **characterized in that** the manual actuating device (52A, 52B) is fixed to a handlebar (50).

9. Bicycle according to one of Claims 1 to 8, **characterized by** at least one overpressure valve.

10. Bicycle according to one of Claims 1 to 9, **characterized by** a distribution device (46) for a plurality of components (18, 20, 24, 28) pressurized with the pressure medium.

11. Bicycle according to one of Claims 1 to 10, **characterized in that** the component (24, 28) pressurized with a pressure medium is a tyre of a wheel (22, 26) of the bicycle.

12. Bicycle according to Claim 11, **characterized in that** the wheel (22, 26) comprises a sealed hub (60, 68), in whose axle an airline (58, 66) fixed to the frame or to the fork opens, and which is connected radially to an airline (62, 70) that rotates with respect to the hub axle and leads to a pressure chamber belonging to the tyre (24, 28).

13. Bicycle according to one of Claims 1 to 12, **characterized in that** the component (28, 20) pressurized with the pressure medium is a chassis damper element of the bicycle.

14. Bicycle according to one of Claims 1 to 13, **characterized in that** the compressor (72) can be driven by means of a toothed belt (92), which connects the drive wheel (86) of the compressor (72) and the drive crank unit (30).

## Revendications

1. Bicyclette, comprenant un cadre (12) avec un tube de selle, au moins un composant (18, 20, 24, 28) à gaz sous pression ainsi qu'un système pressurisé incluant une source de pression (40) reliée audit composant (18, 20, 24, 28), où la source de pression (40) comporte d'une part un compresseur (72) muni d'une roue d'entraînement (86) pouvant être entraînée par un pédalier d'entraînement (30) de ladite bicyclette, et d'autre part une section de stockage (74) pouvant être rechargée en pression de gaz au moyen dudit compresseur (72), **caractérisé en ce que** la source de pression (40) est agencée sous la forme d'une cartouche qui est adaptée à l'intérieur du tube de selle (38) du cadre (12), et **en ce qu'**un arbre d'entraînement (82) du compresseur (72) traverse le tube de selle, et que le compresseur (72) est muni d'un orifice d'aspiration (100) qui traverse le tube de selle (38).

2. Bicyclette selon la revendication 1, **caractérisé en ce qu'**une vanne automatique est disposée entre le compresseur (72) et la section de stockage (74), de façon à commuter lorsque la pression dans la section de stockage (74) atteint une pression de consigne.

3. Bicyclette selon la revendication 1, **caractérisé par** un embrayage (110) disposé entre le pédalier d'entraînement (30) et le compresseur (72), lequel embrayage s'ouvre lorsqu'une pression de consigne est atteinte dans la section de stockage (74).

4. Bicyclette selon la revendication 1, **caractérisé en ce qu'**il est prévu un filtre (102) sur l'orifice d'aspiration (100).

5. Bicyclette selon l'une quelconque des revendications 1 à 4, **caractérisé en ce qu'**au moins un dispositif manuel de commande (52A, 52B) est agencé dans l'une des conduites (44, 48, 56, 58, 64, 66) qui relient la source de pression (40) et les composants sous pression de gaz (18, 20, 24, 28).

6. Bicyclette selon la revendication 5, **caractérisé en ce que** le dispositif manuel de commande (52A, 52B) comprend au moins un interrupteur à bascule (132, 132A).

7. Bicyclette selon l'une quelconque des revendications 5 ou 6, **caractérisé en ce que** le dispositif manuel de commande (52A, 52B) comprend au moins un indicateur de pression (134, 134A).

8. Bicyclette selon l'une quelconque des revendications 5 à 7, **caractérisé en ce que** le dispositif manuel de commande (52A, 52B) est fixé sur une potence.

9. Bicyclette selon l'une quelconque des revendications 1 à 8, **caractérisé par** au moins une valve de surpression.

10. Bicyclette selon l'une quelconque des revendications 1 à 9, **caractérisé par** au moins un dispositif de répartition (46) pour une pluralité de composants sous pression de gaz (18, 20, 24, 28).

11. Bicyclette selon l'une quelconque des revendications 1 à 10, **caractérisé en ce que** le composant à pression de gaz (24, 28) est un pneumatique d'une roue porteuse (22, 26) de la bicyclette.

12. Bicyclette selon la revendication 11, **caractérisé en ce que** la roue porteuse (22, 26) comprend un moyeu étanche (60, 68), dans l'axe duquel débouche une conduite d'air (58, 66) solidaire du cadre ou de la fourche de façon à être reliée à une conduite d'air (62, 70) rotative radialement autour de l'axe dudit moyeu, laquelle conduit à une chambre de pression du pneumatique (21, 28).

13. Bicyclette selon l'une quelconque des revendications 1 à 12, **caractérisé en ce que** le composant sous pression de gaz (18, 20) est un élément amortisseur de la bicyclette.

14. Bicyclette selon l'une quelconque des revendications 1 à 13, **caractérisé en ce que** le compresseur (72) peut être entraîné au moyen d'une courroie crantée (92) qui relie la roue d'entraînement (86) dudit compresseur (72) au pédalier d'entraînement (30).
